# EUROPEAN PATENT SPECIFICATION

(11) **EP 1 674 777 B1**
(45) Date of publication and mention of the grant of the patent: **24.02.2010**
(21) Application number: 05112693.6
(22) Date of filing: 22.12.2005
(51) Int. Cl.: F16L 3/18, F16F 1/32, F16F 3/02

(54) **Variable load elastic supports**
Elastische Lager mit regelbarer Last
Supports élastiques à charge variable

(30) Priority: 22.12.2004 IT MI20042444
(43) Date of publication of application: 28.06.2006
(73) Proprietor: Saipem S.p.A., 20097 San Donato Milanese (Milano) (IT)
(72) Inventor: Minola, Paolo, 20068 Peschiera Borromeo (Milan) (IT)
(74) Representative: De Gregori, Antonella

(56) References cited:
- WO-A-03/042570
- DE-A1- 3 302 852
- DE-A1- 10 301 269
- US-B1- 6 575 439
- SNAMPROGETTI: "Guida alla progettazione di impianti petrolchimici e di raffinazione" 1972, EDIZIONI G.PIROLA , MILANO, IT * page 536 - page 539 *
- "LISEGA Catalogue" October 2001 (2001-10), * page 2.1 - page 2.5 *

## Description

The present invention refers to variable load elastic supports.

The variable load elastic supports are mechanical devices used to carry the weight of elements (i.e. pipes) which, because of various causes (i.e. thermal variations), allow elastic movements.

The variable load elastic supports existing in the market consist essentially of a helical spring, of a piston, acting on said spring, to which the load compressing the spring is applied and of a cylindrical case which contains all parts assembled with bolts or welded.

The case must be sturdy enough to protect the spring from impacts and from atmospheric agents relative to the condition of use. On the case, a longitudinal slot allows the inspection of all the coils of the spring as well as the measurement of the movement and loads by means of an indicator.

Such supports are shown in the LISEGA Catalogue, October 2001 Edition, pp. 2.1-2.5, and in "Guida alla progettazione di impianti petrolchimid e di raffizione SNAMPROGETTI, Edizioni G. Pirola, Milano (IT) 1972, pp. 536-539. WO 03/042570 and DE 10301269 also show variable load elastic supports, the latter in accordance with the preamble of claim 1.

The springs are equipped with removable locking pins which do not allow the piston to move.

The main drawbacks of said type of supports consist in the imprecise measurement of movements and loads when the supports have to be used for limited maximum movements as well as in the case of bulky sizes.

Surprisingly, a support has been devised which, besides overcoming said drawbacks, has other unexpected advantages, as herewith described.

The variable load elastic support according to the present invention as defined by all of the features of claim 1:

The axial holes (a) should preferably have all the same size; also the radial holes (r) should preferably have all the same size.

Each individual pin (P) is equipped with a temporary locking device (T) to be removed after the installation.

The individual pin (P) can be equipped with the insertion of one or two stacks in series of Belleville spring washers (M).

The pins (P,) with their relative Belleville spring washers, are preferably in numbers of 2,3,4 or 6.

The axial holes are preferably in number of six or seven on each support disk.

In the case of 6 axial holes (a), said holes are all equidistant from each other, in case of 7 axial holes six are equidistant from each other while the remaining one is used to position the pin with the graduated scale (G).

In the case of 2 or 6 pins (P), with their relative Belleville washers it is advisable to use disks with 7 axial holes, while in the case of a number of pins equal to 3 or 4, it is advisableto use disks with 6 axial holes.

The sleeve (C), which locks radially the support disks, may possibly be threaded to allow the regulation on the vertical direction.

The single pieces can be assembled together in a workshop or at the worksite; using a simple tightening operation with provisional screws, positioned in the axial holes (a) of the two support disks, the cold precompression can be applied.

Then, the provisional locking pins are positioned on each pin and the provisional screws are removed.

A further object of the present invention are variable load elastic supports characterized by the fact of consisting of two or more of the above described variable load elastic supports,in accordance with the present invention, positioned either in series or in parallel relative to each other.

The main advantages deriving from the use of variable load elastic supports, according to the present invention, are the following:
- minimum size;
- reading of the movements with an accurate millimetric scale;
- interchangeable component parts;
- minimum maintenance;
- symmetry in the axial and radial plane;
- the same disk is used for either hanged or resting mechanical components (hanged or resting constraint);
- compact mechanical piece;
- ease of transport and stocking;
- centering of the load;
- impossibility of having instability instances on the elastic component;
- constant movement of cold precompression;
- constant and modular sizes;
- possibility of lateral elastic constraint;
- possibility of assembly in series;
- possibility of assembly in parallel;
- possibility of obtaining a mechanical dampener;
- transmission of the lateral shear load;
- minimum number of components all with constant sizes;
- possibility of assembly/disassembly directly at the worksite before installation;
- reusable component in case of plant revamping;
- pin for the springs non removable;
- possibility of regulating the vertical size;
- possibility of positioning the pins with springs in various arrangements;
- removal of the locking pins by means of unscrewing operations;
- possibility of placing the stacks of springs only on one section of the pin;
- design of the arrangement of the pins and springs which can be based on a standard indicated in appropriate special tables;
- optimization of the design-purchase-installation cycle.

Concerning the optimization of the design-purchase-installation cycle, the production cycle presently applied is the following:
1. identification of the mechanical characteristics of the elastic constraint and positioning along the pipe;
2. market research, selection of the supplier and purchase;
3. design of the support respecting the dimensional requirements;
4. possible updating of the elastic support to purchase;
5. installation.

When choosing the support object of the present invention, the purchase of the pieces can take place beforehand on the basis of an evaluation of the quantities; moreover, the design of the support does not depend on the dimensions of the piece as the size requirements are constant.

The definition of the quantity of the Belleville spring washers has only to comply with the date of assembly. All the pieces on hand can be placed in the warehouse as replacement parts.

Concerning the assembly/disassembly at the site, we note that, for instance, having to change the mechanical rigidity characteristics on an already assembled piece it is possible to substitute the predefined Belleville spring washers with the new ones, with only a simple disassembly operation.

The main application fields of the elastic support object of the invention are the following:
- Piping (elastic vertical support with cold precompression);
- Piping (lateral support in any direction);
- Containers (elastic support);
- Machinery (elastic support);
- Buildings (constraints with predefined elastic yield)
- Mechanical components (buffer).

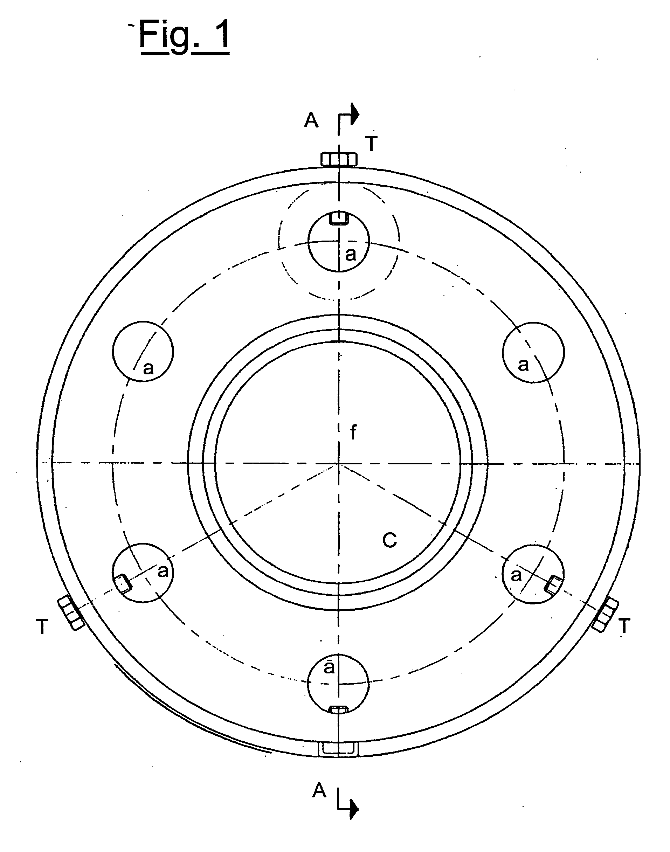

Hereafter is described a realization of the present invention with the help of the attached figures 1-3 which must not be considered a limitation to the present invention.

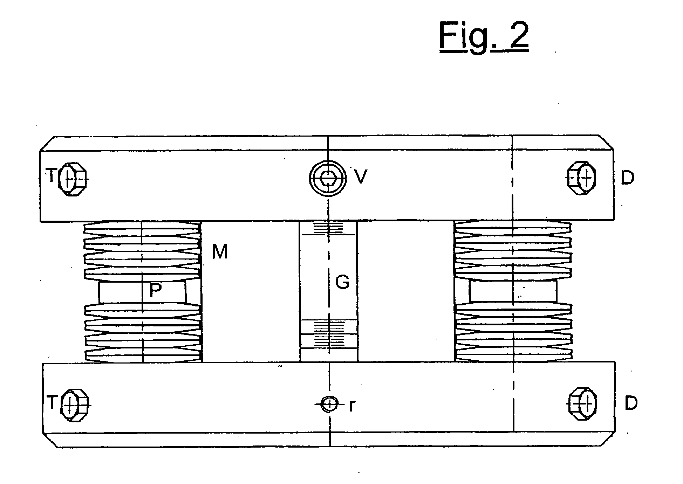

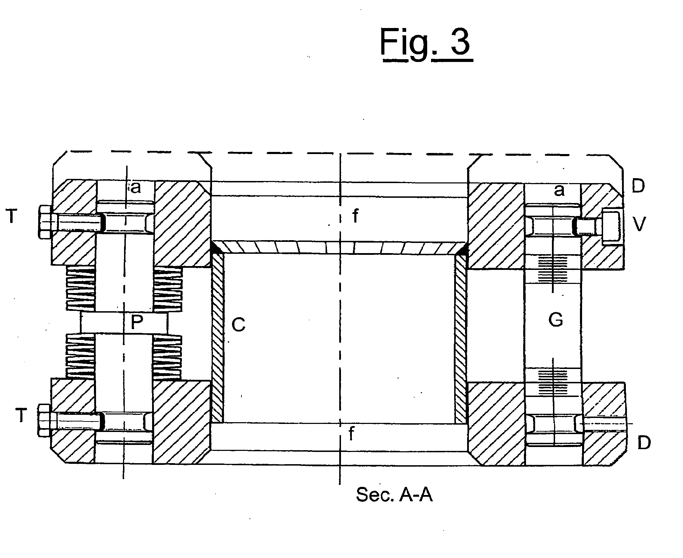

An elastic support according to the invention is represented in fig. 1 in a top view, in fig. 2 in a side view, while in fig 3 is shown a section view (A-A of fig. 1).

The elastic support consists of:
- two equal disks (D), each of which has a central hole (f), 6 equal axial holes (a), equidistant both from each other and from the central axis and with sizes smaller than the central hole, and four radial holes (r), of which three are equidistant from each other;
- three pins (P) with two stacks of Belleville spring washers (M) for their insertion between the support disks (D), by means of three axial holes per each support disk;
- a central sleeve (C) locking the two support disks (D) in the radial direction, by means of the central hole (f) ;
- a pin with a graduated scale (G) positioned between the support disks (D) by means of one of the axial holes (a) on each support disk.
- a screw (V) as a mean of permanent locking, positioned in one of the four radial holes (r), locking the pin with the graduated scale (G);
- three temporary locking pins (T), on each support disk, locking the pins (P), which are removed after the installation, and positioned in the three radial holes (r) on the lateral surface, equidistant from each other.

## Claims

1. Variable load elastic support comprising:
- two equal support disks (D), each having a central axial hole (f) and at least 3 axial holes (a), all or all but one of the axial holes (a) being equidistant either from each other and from the central axis;
- at least two pins (P) for insertion between the support disks (D), positioned by means of a number of axial holes (a) on each support disk equal to the number of pins;
- a means of permanent locking (V);
**characterized in that** it also comprises:
- a central sleeve (C) locking the two support disks (D), in the radial direction, by means of the central hole (f);
- a pin with a graduated scale (G), positioned between the support disks (D) by means of one of the axial holes (a) on each support disk (D), and that:
- the at least two pins (P) each have stacks of Belleville spring washers (M) and are equipped with a temporary locking device (T);
- the two equal support disks have at least three radial holes (r), each extending from the lateral surface until it encounters one of the axial holes (a) and all or all but one equidistant from each other ;
- the means of permanent locking (V), positioned in one of the radial holes (r) on one of the two disks, locks the pin with the graduated scale (G).

2. The elastic support according to claim 1, where the axial holes (a) have all equal size.

3. The elastic support according to claim 1, where the radial holes (r) have all equal size.

4. The elastic support according to claim 1, where the pins (P) with their relative Belleville spring washers are in number of two, three, four or six.

5. The elastic support according to claim 1, where the axial holes (a) are in number of six or seven.

6. The elastic support according to claim 1, where there are one or more stacks of Belleville spring washers for each individual pin (P).

7. The elastic support according to claim 1, where there is a temporary locking means (T), to be removed after the installation, for each individual pin (P).

8. The elastic support according to claim 1, where the sleeve (C) locking the two support disks is threaded for the regulation on the vertical direction.

9. Variable load elastic support **characterized by** the fact of consisting of two or more of the elastic supports according to claim 1, positioned in series or parallel with each other.

## Patentansprüche

1. Elastisches Lager mit regelbarer Last, umfassend:
- zwei gleiche Stützscheiben (D), die jeweils eine zentrale axiale Öffnung (f) und mindestens 3 axiale Öffnungen (a) aufweisen, wobei alle oder alle bis auf eine axiale Öffnung (a) äquidistant zueinander und zu der Zentralachse angeordnet sind;
- mindestens zwei Stifte (P) zum Einsetzen zwischen den Stützscheiben (D), positioniert mittels einer Anzahl axialer Öffnungen (a) auf jede Stützscheibe, die der Anzahl von Stiften entspricht;
- ein Mittel zum permanenten Verriegeln (V);
**dadurch gekennzeichnet, dass** es auch umfasst:
- eine zentrale Hülse (C), die die zwei Stützscheiben (D) in radialer Richtung mittels zentraler Öffnung (f) verriegelt;
- ein Stift mit einer mit Gradeinteilung versehenen Skala (G), positioniert zwischen den Stützscheiben (D) mittels einer der axialen Öffnungen (a) auf jede Stützscheibe (D), und dass:
- die mindestens zwei Stifte (P) jeweils Stapel von Tellerfedern (M) aufweisen und mit einer zeitweisen Verriegelungsvorrichtung (T) ausgestattet sind;
- die zwei gleichen Stützscheiben mindestens drei radiale Öffnungen (r) aufweisen, die sich jeweils von der seitlichen Oberfläche bis zu einer der axialen Öffnungen (a) erstrecken und alle oder alle bis auf eine äquidistant zueinander sind;
- das Mittel zum permanenten Verriegeln (V), positioniert in einer der radialen Öffnungen (r) auf einer der zwei Scheiben, den Stift mit der mit Gradeinteilung versehenen Skala (G) verriegelt.

2. Elastisches Lager nach Anspruch 1, wobei die axialen Öffnungen (a) alle gleiche Größe aufweisen.

3. Elastisches Lager nach Anspruch 1, wobei die radialen Öffnungen (r) alle gleiche Größe aufweisen.

4. Elastisches Lager nach Anspruch 1, wobei die Stifte (P) mit ihren jeweiligen Tellerfedern in der Anzahl von zwei, drei, vier oder sechs sind.

5. Elastisches Lager nach Anspruch 1, wobei die axialen Öffnungen (a) in der Anzahl von sechs oder sieben sind.

6. Elastisches Lager nach Anspruch 1, wobei es einer oder mehrere Stapel von Tellerfedern für jeden einzelnen Stift (P) gibt.

7. Elastisches Lager nach Anspruch 1, wobei es ein temporäres Verriegelungsmittel (T) gibt, welches nach der Installation entfernt werden muss, für jeden einzelnen Stift (P).

8. Elastisches Lager nach Anspruch 1, wobei die Hülse (C), die die zwei Stützscheiben verriegelt, für die Regulierung auf der vertikalen Richtung aufgeschraubt ist.

9. Elastisches Lager mit regulierbarer Last, **dadurch gekennzeichnet, dass** es aus zwei oder mehreren der elastischen Lager nach Anspruch 1 besteht, die hintereinander oder parallel zueinander angeordnet sind.

## Revendications

1. Support élastique à charge variable, comprenant :
- deux disques de support égaux (D), comportant chacun un trou axial central (f) et au moins 3 trous axiaux (a), tous les trous axiaux (a), ou tous sauf un, étant équidistants les uns des autres et de l'axe central ;
- au moins deux broches (P) pour l'insertion entre les disques de support (D), positionnées à l'aide d'un nombre de trous axiaux (a) sur chaque disque de support égal au nombre de broches ;
- des moyens de verrouillage permanent (V) ;
**caractérisé en ce qu'**il comprend également :
- un manchon central (C) verrouillant les deux disques de support (D), dans la direction radiale, à l'aide du trou central (f) ;
- une broche avec une échelle graduée (G), positionnée entre les disques de support (D) à l'aide de l'un des trous axiaux (a) sur chaque disque de support (D),
et en ce qui :
- les broches (P) au nombre d'au moins deux comportent chacune des empilements de rondelles Belleville élastiques (M) et sont chacune équipées d'un dispositif de verrouillage temporaire (T) ;
- les deux disques de support égaux comportent au moins trois trous radiaux (r), s'étendant chacun à partir de la surface latérale jusqu'à ce qu'ils rencontrent l'un des trous axiaux (a), et tous, ou tous sauf un, étant équidistants les uns des autres ;
- les moyens de verrouillage permanent (V), positionnés dans l'un des trous radiaux (r) sur l'un des deux disques, verrouillent la broche avec l'échelle graduée (G).

2. Support élastique selon la revendication 1, dans lequel les trous axiaux (a) ont tous une taille égale.

3. Support élastique selon la revendication 1, dans lequel les trous radiaux (r) ont tous une taille égale.

4. Support élastique selon la revendication 1, dans lequel les broches (P) avec leurs rondelles Belleville élastiques relatives sont au nombre de deux, de trois, de quatre ou de six.

5. Support élastique selon la revendication 1, dans lequel les trous axiaux (a) sont au nombre de six ou de sept.

6. Support élastique selon la revendication 1, dans lequel il y a un ou plusieurs empilements de rondelles Belleville élastiques pour chaque broche individuelle (P).

7. Support élastique selon la revendication 1, dans lequel il y a des moyens de verrouillage temporaire (T), destinés à être retirés après l'installation, pour chaque broche individuelle (P).

8. Support élastique selon la revendication 1, dans lequel le manchon (C) verrouillant les deux disques de support est fileté pour le réglage dans la direction verticale.

9. Support élastique à charge variable **caractérisé par le fait qu'**il est constitué par deux ou plusieurs des supports élastiques selon la revendication 1, positionnés en série ou en parallèle les uns par rapport aux autres.
